# EUROPEAN PATENT APPLICATION

(11) **EP 4 332 245 A1**
(43) Date of publication of application: **06.03.2024**
(21) Application number: 23190523.3
(22) Date of filing: 09.08.2023
(51) Int. Cl.: C21D 7/06, C21D 9/28, C21D 9/32, C21D 9/40, C21D 11/00, B24C 1/10, F01D 1/00, F02C 1/00

(54) **METHOD OF MANUFACTURING COMPONENT, A COMPONENT MANUFACTURED BY THE METHOD, A GAS TURBINE ENGINE**

(30) Priority: 05.09.2022 GB 202212898
(71) Applicant: Rolls-Royce plc, London N1 9FX (GB)
(72) Inventor: Rawson, Martin, Derby, DE24 8BJ (GB); Molokanov, Aleksej, Derby, DE24 8BJ (GB); Hetherington, John, Derby, DE24 8BJ (GB)
(74) Representative: Rolls-Royce plc

(57) **Abstract**

A method (500) of manufacturing a component (102) includes supporting the component (102) on a mounting structure (104). The method (500) further includes impacting first peening bodies (110) on the component (102) to increase sub-surface compressive residual stresses of the component (102). The first peening bodies (110) impact the component (102) at a first intensity of from about 0.45 mmA to about 0.61 mmA. A first coverage of the component (102) by the first peening bodies (110) is from about 120% to about 205%. The method (500) further includes impacting second peening bodies (112) on the component (102) to increase surface compressive residual stresses of the component (102). The second peening bodies (112) impact the component (102) at a second intensity of from about 0.20 mmA to about 0.30 mmA. A second coverage of the component (102) by the second peening bodies (112) is from about 120% to about 205%. Each of the first peening bodies (110) and the second peening bodies (112) includes a ceramic material.

## Description

### FIELD OF THE DISCLOSURE

The present disclosure relates to a component and a method of manufacturing thereof.

### BACKGROUND

A gas turbine engine generally includes various components such as, for example, one or more gears, shafts, and bearings. Such engine components may have to be treated in order to increase their surface compressive residual stresses and sub-surface compressive residual stresses to ensure a longer operating life of the engine components. Typically, a shot peening process is performed on the engine components to increase their surface and sub-surface compressive residual stresses.

The shot peening process includes impacting the engine component with a number of shot peening medias. Conventionally, the shot peening medias are made of steel, and more particularly, cast steel. Such shot peening medias made of steel may have a significantly lower hardness value in comparison with a hardness value of the engine component. Further, the shot peening medias may not impact the engine component at an optimal intensity. Accordingly, conventional shot peening medias and an intensity range at which the shot peening medias impact the engine component may not efficiently transfer impact energy from the shot peening medias to the engine component resulting in lower and shallow compressive residual stresses in the engine component. The lower and shallow compressive residual stresses may alter a bending fatigue performance and failure mechanisms in the engine components, which is not desirable.

### SUMMARY OF THE DISCLOSURE

According to a first aspect, there is provided a method of manufacturing a component. The method includes supporting the component on a mounting structure. The method further includes impacting a plurality of first peening bodies on the component to increase sub-surface compressive residual stresses of the component. The plurality of first peening bodies impact the component at a first intensity of from about 0.45 mmA to about 0.61 mmA. A first coverage of the component by the plurality of first peening bodies is from about 120% to about 205%. The method further includes impacting a plurality of second peening bodies on the component to increase surface compressive residual stresses of the component. The plurality of second peening bodies impact the component at a second intensity of from about 0.20 mmA to about 0.30 mmA. A second coverage of the component by the plurality of second peening bodies is from about 120% to about 205%. Each of the plurality of first peening bodies and the plurality of second peening bodies includes a ceramic material.

The method described herein may allow effective transfer of impact energy from the plurality of first peening bodies and the plurality of second peening bodies to the component. Therefore, the method may enhance a magnitude and a depth of the surface compressive residual stresses and the sub-surface compressive residual stresses in the component. Further, improvement in the surface and sub-surface compressive residual stresses may modify failure mechanisms in the component, which may in turn improve a bending fatigue performance of the component.

Moreover, the component manufactured by the method described herein may increase a low cycle fatigue strength level of the component by about 11% to about 12% as compared to conventional shot peening processes that use cast steel medias. The method may further increase a high cycle fatigue strength level of the component by about 4% to about 7% as compared to conventional shot peening processes that use cast steel medias. In addition, the method may increase a crack initiation depth of the component by about 20% or more. Increase in the crack initiation depth may be attributed to the increase in the depth and the magnitude of the surface and sub-surface compressive residual stresses of the component.

In some embodiments, the ceramic material is a high density ceramic material. The high density ceramic material may be less susceptible to defects, such as, porosity and cracks. Further, as the ceramic material may have higher surface hardness as compared to a hardness of the component, the first and second peening bodies may efficiently transfer adequate impact energy from the first and second peening bodies into a substrate of the component.

In some embodiments, the component is made of a carburised steel, a non-carburised steel, a nitrided steel, a non-nitrided steel, or an induction hardened high-strength steel. Thus, the method described herein may be used to increase the surface and sub-surface compressive residual stresses of components made from different types of steels.

In some embodiments, a component surface hardness of the component is from about 370 hardness according to Vickers (HV) to about 1000 HV. Thus, the method described herein may be used to treat components having higher hardness values.

In some embodiments, a first surface hardness of each of the plurality of first peening bodies and a second surface hardness of each of the plurality of second peening bodies is greater than the component surface hardness. As a result, an adequate amount of impact energy may be transferred from the first and second peening bodies having a higher surface hardness to the component having a lower surface hardness.

In some embodiments, each of the first surface hardness and the second surface hardness is from about 800 HV to about 1200 HV. Higher values of the first and second surface hardness may allow high amount of impact energy to be transferred to the component.

In some embodiments, the plurality of first peening bodies includes a first average diameter and the plurality of second peening bodies includes a second average diameter. The first average diameter is different from the second average diameter. The plurality of first peening bodies having the first average diameter may be used in a primary shot peening stage to increase the sub-surface compressive residual stresses and the plurality of second peening bodies having the second average diameter may be used in a secondary shot peening stage to increase the surface compressive residual stresses.

In some embodiments, the first average diameter is greater than the second average diameter. The plurality of first peening bodies having a larger average diameter may be used to increase the sub-surface compressive residual stresses of the component during the primary shot peening stage. Further, the plurality of second peening bodies having a smaller average diameter may be used to increase the surface compressive residual stresses of the component during the secondary shot peening stage.

In some embodiments, the first average diameter is from about 500 micrometre (µm) to about 900 µm. The first peening bodies having the first average diameter between 500 µm and 900 µm may efficiently transfer impact energy to the component during the primary shot peening stage, thereby increasing the sub-surface compressive residual stresses of the component.

In some embodiments, the second average diameter is from about 300 µm to about 600 µm. The second peening bodies having the second average diameter between 300 µm and 600 µm may efficiently transfer impact energy to the component during the secondary shot peening stage, thereby increasing the surface compressive residual stresses of the component.

In some embodiments, the first intensity is from about 0.45 mmA to about 0.50 mmA. A combination of the first intensity between 0.45 mmA and 0.50 mmA during the primary shot peening stage and the first peening bodies made of the ceramic material may enhance the depth and the magnitude of the sub-surface compressive residual stresses in the component.

In some embodiments, the first intensity is from about 0.55 mmA to about 0.61 mmA. A combination of the first intensity between 0.55 mmA and 0.61 mmA during the primary shot peening stage and the first peening bodies made of the ceramic material may enhance the depth and the magnitude of the sub-surface compressive residual stresses in the component.

In some embodiments, the first intensity is greater than the second intensity. Specifically, the first intensity is decided so as to increase the sub-surface compressive residual stresses in the component, whereas the second intensity is decided so as to increase the surface compressive residual stresses in the component.

According to a second aspect, there is provided a component. The component is manufactured using the method of the first aspect. The component may exhibit enhanced surface and sub-surface compressive residual stresses after the primary and secondary shot peening stages. The enhanced surface and sub-surface compressive residual stresses may modify failure mechanisms in the component during bending fatigue conditions. For example, due to deeper and higher surface and sub-surface compressive residual stresses, the failure may occur deeper in the component, or away from a surface of the component, where applied/service stresses are lower compared to the surface. Additionally, increased surface compressive residual stresses after the secondary peening stage may shift any failure in the component from the surface of the component into an interior of the component.

In some embodiments, the component is a rotating component or a static component. Thus, the method described herein may be used to increase the surface and sub-surface compressive residual stresses of various types of components associated with different types of engines or machines.

In some embodiments, the component is a gear, a shaft, or a bearing. Further, the component may be any other part of a gas turbine engine that may be used in an aerospace industry or any other engine/machine that may be used in marine or land vehicles. In one example, the component may include an aerospace mainline shaft or bearings.

According to a third aspect, there is provided a gas turbine engine including the component of the second aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e., the values may form upper or lower bounds), for example in the range of from 80 Nkg-1s to 100 Nkg-1s, or 85 Nkg-1s to 95 Nkg-1s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a schematic view of a shot peening apparatus, a mounting structure, and a component of the gas turbine engine of **Figure 1** according to an embodiment of the present disclosure;
**Figure 3** is a block diagram of a system used for performing a shot peening process on the component of **Figure 2** according to an embodiment of the present disclosure;
**Figure 4A** is a schematic top view illustrating a plurality of first peening bodies impacting the component according to an embodiment of the present disclosure;
**Figure 4B** is a schematic top view illustrating a plurality of second peening bodies impacting the component according to an embodiment of the present disclosure; and
**Figure 5** is a flowchart for a method of manufacturing the component of **Figure 2** according to an embodiment of the present disclosure.

### DETAILED DESCRIPTION

Aspects and embodiments of the present disclosure will now be discussed with reference to the accompanying figures. Further aspects and embodiments will be apparent to those skilled in the art.

As used herein, a component extends "axially" relative to an axis if the component extends along the axis.

As used herein, the term "average diameter" may be referred to an arithmetic mean of diameters of a plurality of spherical elements having a size range or distribution.

As used herein, the term "shot peening process" may be defined as striking of a surface of a component with a shot peening media with enough force to generate plastic deformation. When a group of shot peening medias impact the surface of the component, multiple indentations may be generated on the surface of the component, which may result in the component being encased by a compressive stressed layer on the surface thereof.

As used herein, the term "mmA" may refer to a unit of Almen Intensity or peening intensity. The Almen intensity or peening intensity may be defined as a measure of an average dent capability of an individual shot peening media that may strike the surface.

As used herein, the term "coverage" may also be known as shot coverage. It may refer to a percentage of a surface of a component impacted by a plurality of shot peening medias during a shot peening process.

As used herein, the term "superfinishing process" may be defined as a material removal process that may be performed on a component after the component has undergone another type of surface modification process.

As used herein, the term "surface compressive residual stresses" refers to compressive stresses generated in an outermost layer of a component. A compressive residual stress cancels a tensile stress that may be a factor of failures in the component, and thus contributes to a higher strength of the component. Accordingly, the surface compressive residual stresses can be used as a direct measure for an improvement of the strength of the component.

As used herein, the term "sub-surface compressive residual stresses" refers to a presence of compressive stresses at a depth of a component measured from an outermost surface of the component as a standard. A deeper compressive residual stress layer corresponds to higher ability to prevent a large microcrack (crack) on the outermost surface of the component from growing, in other words, higher ability to maintain strength against any damage to the component.

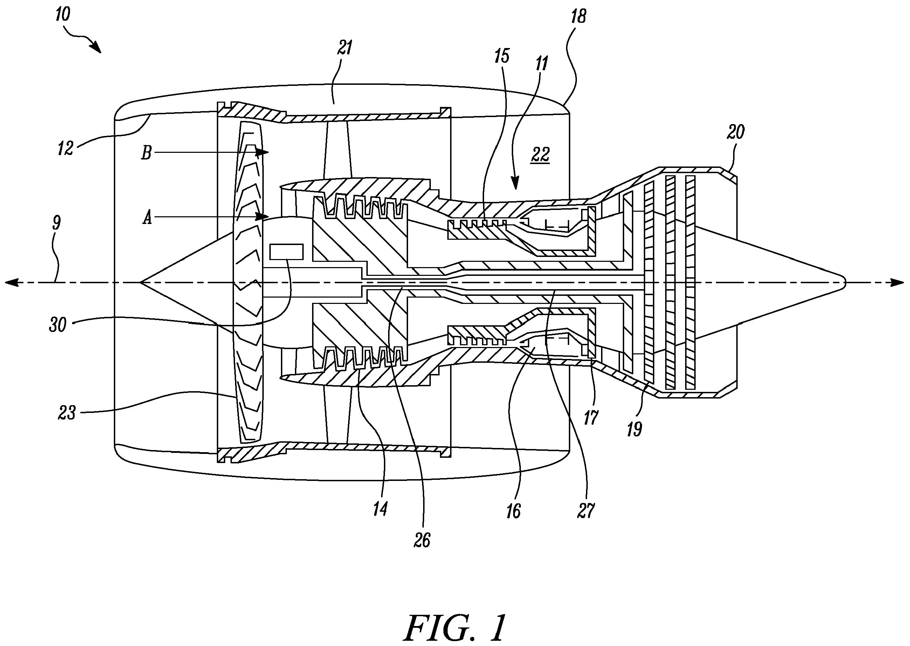

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has the split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise the gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial, and circumferential directions are mutually perpendicular. The present invention is equally applicable to aero gas turbine engines, marine gas turbine engines, and land-based gas turbine engines.

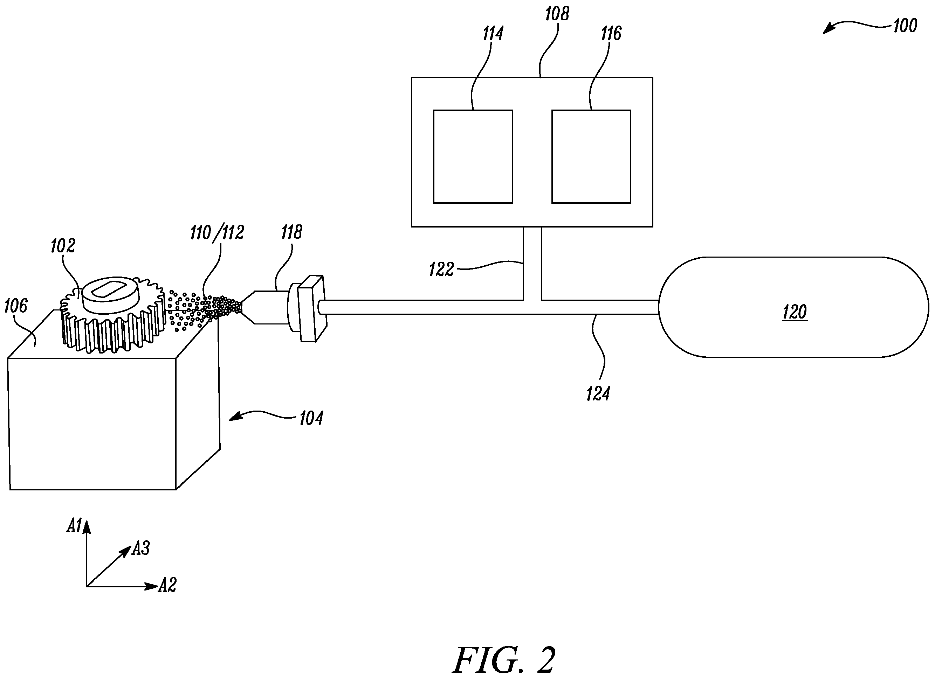

Figure 2 shows a schematic view of a shot peening apparatus 100 in accordance with an embodiment of the present disclosure. The shot peening apparatus 100 may be used to perform a shot peening process on a component 102. In some embodiments, the gas turbine engine 10 (shown in Figure 1) includes the component 102. In some embodiments, the component 102 is made of a carburised steel, a non-carburised steel, a nitrided steel, a non-nitrided steel, or an induction hardened high-strength steel. It should be noted that the component may be made of any other material, without any limitations thereto. In some examples, the component 102 may include an ultimate tensile strength (UTS) of at least about 1200 Mega Pascals (MPa). In some embodiments, a component surface hardness of the component 102 is from about 370 hardness according to Vickers (HV) to about 1000 HV. In some embodiments, the component 102 is a rotating component or a static component. In some embodiments, the component 102 is a gear, a shaft, or a bearing. In the illustrated embodiment of Figure 2, the component 102 is a gear. However, in other embodiments, the component 102 may include any aerospace mainline shafts or bearings, without any limitations.

The component 102 is supported on a mounting structure 104. In an example, the mounting structure 104 may be an integral part of the shot peening apparatus 100. The mounting structure 104 defines a first axis A1. The mounting structure 104 includes a top surface 106. Further, in the illustrated embodiment of Figure 2, the component 102 is supported on the top surface 106 of the mounting structure 104. In other examples, the component 102 may be housed within an enclosure defined by the mounting structure 104. In the illustrated embodiment of Figure 2, the mounting structure 104 includes a cuboid shape. However, in other embodiments, the mounting structure 104 may include any other shape, such as, for example, a cylindrical shape or any combination of shapes that may facilitate supporting of the component 102.

The mounting structure 104 further defines a second axis A2 and a third axis A3 perpendicular to the second axis A2. Each of the second axis A2 and the third axis A3 is perpendicular to the first axis A1. The second axis A2 and the third axis A3 lie in a plane of the top surface 106 of the mounting structure 104. It should be noted that the mounting structure 104 may include suitable elements (not shown herein) that may facilitate fixing of the component 102 in order to inhibit movement of the component 102 relative to the mounting structure 104. For example, the mounting structure 104 may include a fixture to fix a position of the component 102 relative to the mounting structure 104. In some examples, the mounting structure 104 may be movable along the first axis A1, the second axis A2, and/or the third axis A3 in order to adjust the position of the component 102. In such examples, the mounting structure 104 may include one or more first actuation devices (not shown) that may be used to adjust the position of the component 102 along any of the first axis A1, the second axis A2, and/or the third axis A3. In an example, the mounting structure 104 may be rotatable about the first axis A1 to rotate the component 102 during the shot peening process. In such examples, the mounting structure 104 may include one or more second actuation devices (not shown) that may allow rotation of the component 102 about the first axis A1.

As shown in Figure 2, the shot peening apparatus 100 includes a tank 108 for storing a plurality of first peening bodies 110 and a plurality of second peening bodies 112. Specifically, the tank 108 includes a first chamber 114 for storing the plurality of first peening bodies 110. The tank 108 further includes a second chamber 116 for storing the plurality of second peening bodies 112. Alternatively, the shot peening apparatus 100 may include two separate tanks for holding the first peening bodies 110 and the second peening bodies 112 instead of the single tank 108. In some embodiments, each of the plurality of first peening bodies 110 and the plurality of second peening bodies 112 includes a ceramic material. In some embodiments, the ceramic material is a high density ceramic material. The high density ceramic material may be less susceptible to defects, such as, porosity and cracks. In some examples, each of the plurality of first peening bodies 110 and the plurality of second peening bodies 112 may include a spherical shape. In some embodiments, a first surface hardness of each of the plurality of first peening bodies 110 and a second surface hardness of each of the plurality of second peening bodies 112 is greater than the component surface hardness. Specifically, the high density ceramic material of the first peening bodies 110 and the second peening bodies 112 may have a higher surface hardness as compared to the component surface hardness of the component 102. In some embodiments, each of the first surface hardness and the second surface hardness is from about 800 HV to about 1200 HV. However, the first and second surface hardness may vary based on factors including, but not limited to, the component surface hardness.

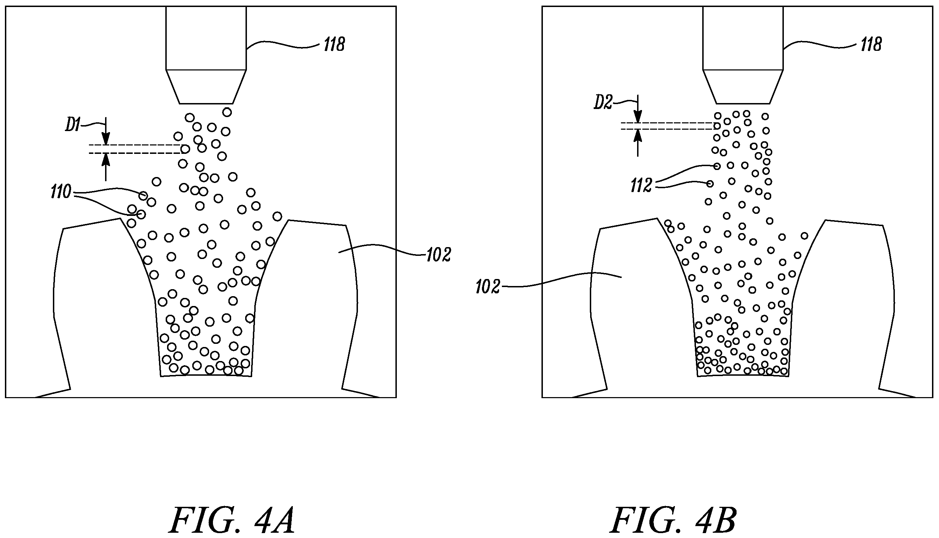

In some embodiments, the plurality of first peening bodies 110 includes a first average diameter D1 (shown in Figure 4A). In some embodiments, the first average diameter D1 is from about 500 micrometre (µm) to about 900 µm. In one embodiment, the first average diameter D1 is approximately equal to 600 µm. Further, in some embodiments, the plurality of second peening bodies 112 includes a second average diameter D2 (shown in Figure 4B). In some embodiments, the first average diameter D1 is different from the second average diameter D2. Specifically, in the illustrated embodiment of Figures 4A and 4B, the first average diameter D1 is greater than the second average diameter D2. In some embodiments, the second average diameter D2 is from about 300 µm to about 600 µm. In one embodiment, the second average diameter D2 is approximately equal to 400 µm. It should be noted that the first and second surface average diameters D1, D2, may vary based on factors including, but not limited to, the component surface hardness, desired amounts of the surface and sub-surface compressive residual stress to be induced in the component 102, or a material of the component 102.

The shot peening apparatus 100 further includes one or more shot projection devices 118. In the illustrated embodiment of Figure 2, the shot peening apparatus 100 includes a single shot projection device 118. However, in other embodiments, the shot peening apparatus 100 may include a pair of shot projection devices 118. In other embodiments, the shot peening apparatus 100 may include multiple projection devices, without any limitations thereto. The shot projection device 118 may be a nozzle or a wheel. In the illustrated embodiment of Figure 2, the shot projection device 118 is a nozzle. The shot projection device 118 may be used to direct the plurality of first peening bodies 110 and the plurality of second peening bodies 112 towards the component 102 in order to increase the sub-surface compressive residual stresses and the surface compressive residual stresses of the component 102, respectively. In some examples, a position of the shot projection device 118 may be adjustable relative to the component 102 and the mounting structure 104. In other examples, a position of the component 102 and/or the mounting structure 104 may be adjustable relative to the shot projection device 118.

The shot peening apparatus 100 further includes an air source 120 for supplying compressed air towards the shot projection device 118. The compressed air supplied by the air source 120 may adjust an intensity with which the first and second peening bodies 110, 112 impact the component 102. Further, the tank 108 and the air source 120 may be connected to the shot projection device 118 by respective tubes 122, 124. Specifically, the tube 122 may direct the plurality of first peening bodies 110 and the plurality of second peening bodies 112 towards the shot projection device 118 from the tank 108. Further, the tube 124 may direct the compressed air from the air source 120 towards the shot projection device 118. It should be noted that the shot peening apparatus 100 as described herein is exemplary in nature and the shot peening apparatus 100 may include additional devices that may assist in performing the shot peening process on the component 102. Further, the shot peening apparatus 100 may embody any known in the art apparatus that may be used to perform the shot peening process. To that end, the shot peening apparatus 100 may include any one of a centrifugal wheel machine, a direct pressure machine, and an air jet machine. In an example, the shot peening apparatus 100 may be gravity fed. In another example, the shot peening apparatus 100 may embody an ultrasonic shot peening machine.

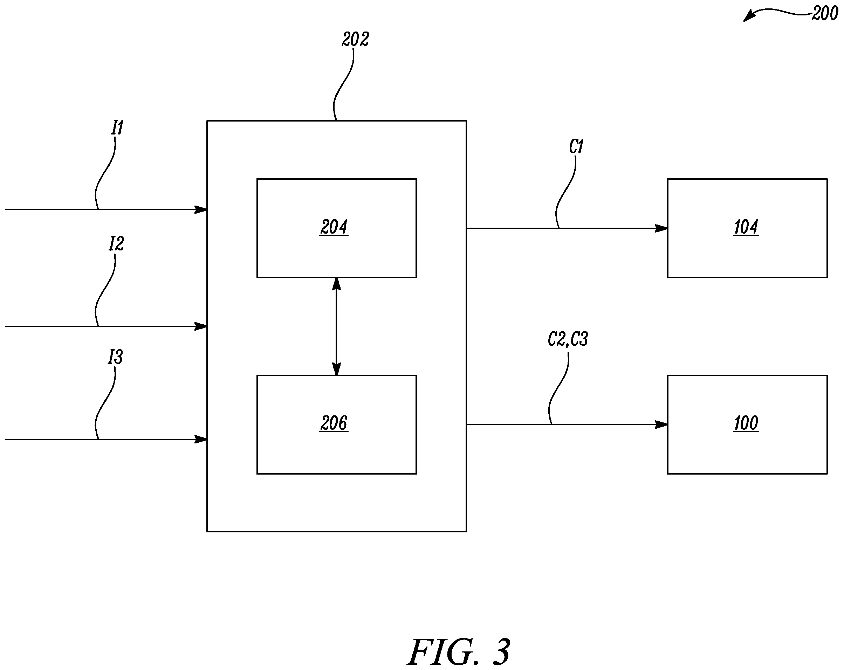

Figure 3 illustrates a block diagram of a system 200 for performing the shot peening process, in accordance with an embodiment of the present disclosure. The system 200 includes a controller 202 communicably coupled with the shot peening apparatus 100 and the mounting structure 104. The controller 202 includes one or more memories 204 and one or more processors 206 communicably coupled to the one or more memories 204. The processors 206 may be any device that performs logic operations. It should be noted that the processors 206 may embody a single microprocessor or multiple microprocessors for receiving various detection signals. Numerous commercially available microprocessors may be configured to perform the functions of the processors 206. The processors 206 may further include a general processor, a central processing unit, an application specific integrated circuit (ASIC), a digital signal processor, a field programmable gate array (FPGA), a digital circuit, an analog circuit, a controller, a microcontroller, any other type of processor, or any combination thereof. The processors 206 may include one or more components that may be operable to execute computer executable instructions or computer code that may be stored and retrieved from the memories 204.

Further, the memories 204 may store information required for performing the shot peening process on the component 102. In some examples, the information may be related to optimal/predefined positions of the mounting structure 104 during the shot peening process. In other examples, the information may be related to optimal/predefined intensity ranges at which the first and second peening bodies 110, 112 are configured to impact the component 102.

The processors 206 may be configured to control functioning of the shot peening apparatus 100. Further, the processors 206 may be configured to determine a current position of the component 102 and/or the mounting structure 104. In some examples, a position sensor (not shown) may be disposed proximate to the component 102 for determining the current position of the component 102. Further, the processors 206 may retrieve the information regarding the optimal position of the component 102 from the memories 204. The processors 206 may be configured to receive a first input signal I1 from an operator for initiating the shot peening process. Based on the receipt of the first input signal I1, the processors 206 may compare the current position of the component 102 with the optimal position of the component 102. If the current position of the component 102 does not correspond to the optimal position of the component 102, the processors 206 may generate and transmit a first control signal C1 to the first and/or second actuation devices associated with the mounting structure 104 for adjusting the position of the component 102.

The shot peening process is embodied as a duplex shot peening process which implies that the shot peening process is performed in two stages, i.e., a primary shot peening stage and a secondary shot peening stage. The processors 206 may be configured to receive a second input signal I2 and a third input signal I3 from the operator. The second input signal I2 may be a command signal for initiating the primary shot peening stage of the shot peening process, and the third input signal I3 may be a command signal for initiating the secondary shot peening stage of the shot peening process. The primary shot peening stage will be explained in reference to Figures 2, 3, and 4A whereas the secondary shot peening stage will be explained in reference to Figures 2, 3, and 4B.

Referring to Figures 2, 3, and 4A, upon receiving the second input signal I2 from the operator, the processors 206 may generate a second control signal C2 to control the functioning of the shot peening apparatus 100. Based on the second control signal C2, the plurality of first peening bodies 110 may be directed towards the shot projection device 118. Further, the compressed air may be directed from the air source 120 towards the shot projection device 118. It should be noted that an amount and/or a pressure of the compressed air supplied to the shot projection device 118 may be controlled by the processors 206. The shot projection device 118 may direct the plurality of first peening bodies 110 towards the component 102 based on a supply of the compressed air. Thus, the amount and/or the pressure of the compressed air being supplied by the air source 120 may regulate a first intensity at which the first peening bodies 110 impact the component 102.

In some embodiments, the plurality of first peening bodies 110 impact the component 102 at the first intensity of from about 0.45 mmA to about 0.61 mmA. In one embodiment, the first intensity is from about 0.45 mmA to about 0.50 mmA. In another embodiment, the first intensity is from about 0.55 mmA to about 0.61 mmA. It should be noted that information pertaining to the first intensity may be stored within the memories 204 and may retrieved by the processors 206 as and when required. During the primary shot peening stage, a combination of the first intensity between 0.45 mmA and 0.61 mmA and the first peening bodies 110 made of the high density ceramic material may enhance a depth and a magnitude of the sub-surface compressive residual stresses in the component 102. Further, a first coverage of the component 102 by the plurality of first peening bodies 110 is from about 120% to about 205%.

Referring now to Figures 2, 3, and 4B, upon receiving the third input signal I3 from the operator, the processors 206 may generate a third control signal C3 to control the functioning of the shot peening apparatus 100. Based on the third control signal C3, the plurality of second peening bodies 112 may be directed towards the shot projection device 118. Further, the compressed air may be directed from the air source 120 towards the shot projection device 118. It should be noted that an amount of the compressed air supplied to the shot projection device 118 may be controlled by the processor 206. The shot projection device 118 may direct the plurality of second peening bodies 112 towards the component 102 based on a supply of the compressed air. Thus, the amount and/or the pressure of the compressed air being supplied by the air source 120 may regulate a second intensity at which the second peening bodies 112 impact the component 102.

In some embodiments, the plurality of second peening bodies 112 impact the component 102 at a second intensity of from about 0.20 mmA to about 0.30 mmA. In some embodiments, the first intensity is greater than the second intensity. It should be noted that information pertaining to the second intensity may be stored within the memories 204 and may be retrieved by the processors 206 as and when required. During the secondary shot peening stage, a combination of the second intensity between 0.20 mmA and 0.30 mmA and the second peening bodies 112 made of the high density ceramic material may enhance a depth and a magnitude of the surface compressive residual stresses in the component 102. Further, a second coverage of the component 102 by the plurality of second peening bodies 112 is from about 120% to about 205%. It should be noted that, during the primary and secondary shot peening stages, the first and second peening bodies 110, 112 are configured to cover an entire geometry of the component 102. Accordingly, the component 102 may be rotated during the primary and secondary shot peening stages so that the first and second peening bodies 110, 112 may contact each portion of the component 102.

In some cases, after the shot peening process is performed on the component 102, a superfinishing process may be performed on the component 102. It should be noted that the superfinishing process may include any known in the art superfinishing process, such as, C.A.S.E^{™} (Chemically Assisted Surface Enhancement) by Metal Improvement Company (MIC, Curtiss-Wright), Stream Finishing by Fintek, or ISF^{®} (Isotropic Superfinishing Process) by REM Surface Engineering. The superfinishing process may improve a fatigue performance of the component 102 and may also improve an average surface roughness value of the component 102.

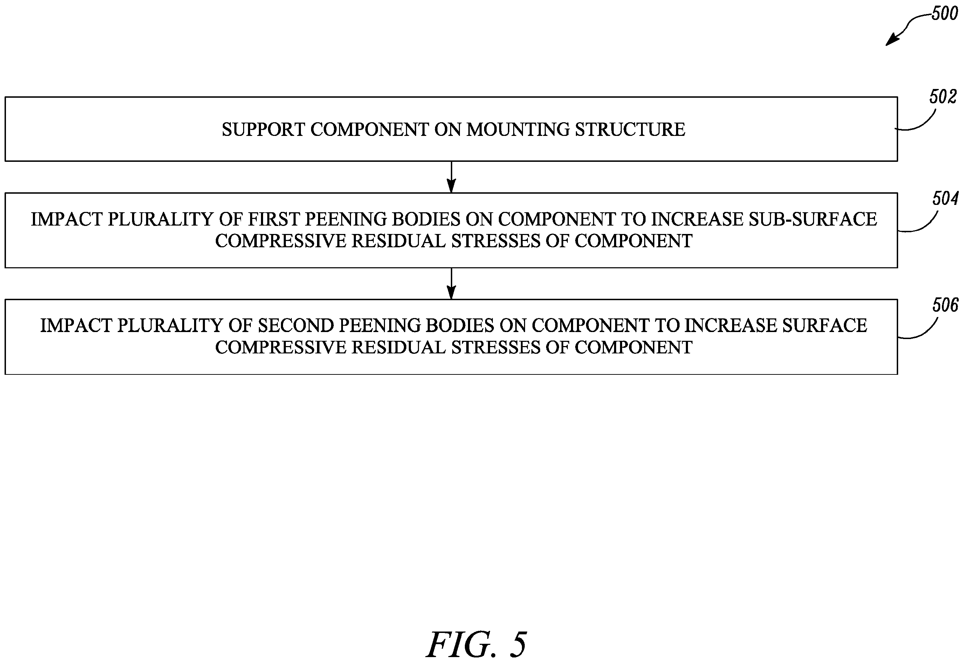

Figure 5 illustrates a flowchart for a method 500 of manufacturing the component 102. At step 502, the component 102 is supported on the mounting structure 104. In some embodiments, the component 102 is made of the carburised steel, the non-carburised steel, the nitrided steel, the non-nitrided steel, or the induction hardened high-strength steel. Thus, the method 500 may be used to increase the surface and sub-surface compressive residual stresses of components made of different types of steels. In some embodiments, the component surface hardness of the component 102 is from about 370 HV to about 1000 HV. Thus, the method 500 may be used to treat components having higher surface hardness values.

At step 504, the plurality of first peening bodies 110 impact the component 102 to increase the sub-surface compressive residual stresses of the component 102. In some embodiments, the plurality of first peening bodies 110 impact the component 102 at the first intensity of from about 0.45 mmA to about 0.61 mmA. Further, in some embodiments, the first coverage of the component 102 by the plurality of first peening bodies 110 is from about 120% to about 205%. In some embodiments, the first intensity is from about 0.45 mmA to about 0.50 mmA. In some embodiments, the first intensity is from about 0.55 mmA to about 0.61 mmA.

At step 506, the plurality of second peening bodies 112 impact the component 102 to increase the surface compressive residual stresses of the component 102. In some embodiments, the plurality of second peening bodies 112 impact the component 102 at the second intensity of from about 0.20 mmA to about 0.30 mmA. Further, in some embodiments, the second coverage of the component 102 by the plurality of second peening bodies 112 is from about 120% to about 205%. In some embodiments, the first intensity is greater than the second intensity.

In some embodiments, each of the plurality of first peening bodies 110 and the plurality of second peening bodies 112 includes the ceramic material. In some embodiments, the ceramic material is the high density ceramic material. In some embodiments, the first surface hardness of each of the plurality of first peening bodies 110 and the second surface hardness of each of the plurality of second peening bodies 112 is greater than the component surface hardness. As a result, an adequate amount of impact energy may be transferred from the first and second peening bodies 110, 112 that have the higher surface hardness to the component 102 that has the lower surface hardness.

In some embodiments, each of the first surface hardness and the second surface hardness is from about 800 HV to about 1200 HV. Higher values of the first and second surface hardness may allow high amount of impact energy transfer from the first and second peening bodies 110, 112 to the component 102. In some embodiments, the plurality of first peening bodies 110 includes the first average diameter D1 and the plurality of second peening bodies 112 includes the second average diameter D2. The first average diameter D1 is different from the second average diameter D2. In some embodiments, the first average diameter D1 is greater than the second average diameter D2. The plurality of first peening bodies 110 having a larger average diameter (i.e., the first average diameter D1) may be used to increase the sub-surface compressive residual stresses of the component 102 during the primary shot peening stage. Further, the plurality of second peening bodies 112 having a smaller average diameter (i.e., the second average diameter D2) may be used to increase the surface compressive residual stresses of the component 102 during the secondary shot peening stage.

In some embodiments, the first average diameter D1 is from about 500 µm to about 900 µm. The first peening bodies 110 having the first average diameter D1 between 500 µm and 900 µm may efficiently transfer impact energy to the component 102 during the primary shot peening stage, thereby increasing the sub-surface compressive residual stresses of the component 102. In some embodiments, the second average diameter D2 is from about 300 µm to about 600 µm. The second peening bodies 112 having the second average diameter D2 between 300 µm and 600 µm may efficiently transfer impact energy to the component 102 during the secondary shot peening stage, thereby increasing the surface compressive residual stresses of the component 102.

The method 500 may increase a low cycle fatigue strength level of the component 102 by about 11% to about 12% as compared to conventional shot peening processes using cast steel medias. The method 500 may further increase a high cycle fatigue strength level of the component 102 by about 4% to about 7% as compared to conventional shot peening processes using the cast steel medias. In addition, the method 500 may further increase a crack initiation depth of the component 102 by about 20% or more. Increase in the crack initiation depth of the component 102 may be attributed to the increase in the depth and the magnitude of the surface and sub-surface compressive residual stresses of the component 102. Thus, overall, the method 500 may allow effective transfer of impact energy from each of the plurality of first peening bodies 110 and the plurality of second peening bodies 112 to the component 102. Therefore, the method 500 may enhance the magnitude and the depth of the surface compressive residual stresses and the sub-surface compressive residual stresses in the component 102, may modify failure mechanisms in the component 102, and may improve a bending fatigue performance of the component 102.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method (500) of manufacturing a component (102), the method (500) comprising:
supporting the component (102) on a mounting structure (104);
impacting a plurality of first peening bodies (110) on the component (102) to increase sub-surface compressive residual stresses of the component (102), wherein the plurality of first peening bodies (110) impact the component (102) at a first intensity of from about 0.45 mmA to about 0.61 mmA, and wherein a first coverage of the component (102) by the plurality of first peening bodies (110) is from about 120% to about 205%; and
impacting a plurality of second peening bodies (112) on the component (102) to increase surface compressive residual stresses of the component (102), wherein the plurality of second peening bodies (112) impact the component (102) at a second intensity of from about 0.20 mmA to about 0.30 mmA, and wherein a second coverage of the component (102) by the plurality of second peening bodies (112) is from about 120% to about 205%,
wherein each of the plurality of first peening bodies (110) and the plurality of second peening bodies (112) comprises a ceramic material.

2. The method (500) of claim 1, wherein the component (102) is made of a carburised steel, a non-carburised steel, a nitrided steel, a non-nitrided steel, or an induction hardened high-strength steel.

3. The method (500) of claim 1 or 2, wherein a component surface hardness of the component (102) is from about 370 hardness according to Vickers (HV) to about 1000 HV.

4. The method (500) of claim 3, wherein a first surface hardness of each of the plurality of first peening bodies (110) and a second surface hardness of each of the plurality of second peening bodies (112) is greater than the component surface hardness.

5. The method (500) of claim 4, wherein each of the first surface hardness and the second surface hardness is from about 800 HV to about 1200 HV.

6. The method (500) of any one of claims 1 to 5, wherein the plurality of first peening bodies (110) comprises a first average diameter (D1) and the plurality of second peening bodies (112) comprises a second average diameter (D2), and wherein the first average diameter (D1) is different from the second average diameter (D2).

7. The method (500) of claim 6, wherein the first average diameter (D1) is greater than the second average diameter (D2).

8. The method (500) of claim 6 or claim 7, wherein the first average diameter (D1) is from about 500 micrometre (µm) to about 900 µm.

9. The method (500) of any one of claims 6 to 8, wherein the second average diameter (D2) is from about 300 µm to about 600 µm.

10. The method (500) of any one of claims 1 to 9, wherein the first intensity is from about 0.45 mmA to about 0.50 mmA.

11. The method (500) of any one of claims 1 to 9, wherein the first intensity is from about 0.55 mmA to about 0.61 mmA.

12. The method (500) of any one of claims 1 to 11, wherein the first intensity is greater than the second intensity.

13. A component (102) manufactured using the method (500) of any one of claims 1 to 12.

14. A gas turbine engine (10) comprising the component (102) of claim 13.
